(19) Europäisches Patentamt
European Patent Office
Office européen des brevets

(11) EP 3 428 210 A1

(12) EUROPÄISCHE PATENTANMELDUNG

(43) Veröffentlichungstag:
**16.01.2019 Patentblatt 2019/03**

(21) Anmeldenummer: **17180816.5**

(22) Anmeldetag: **11.07.2017**

(51) Int Cl.:
***C08G 18/48*** (2006.01) ***C08G 18/76*** (2006.01)
***C08J 9/14*** (2006.01) ***C08G 18/09*** (2006.01)
***C08G 18/40*** (2006.01) ***C08G 18/42*** (2006.01)
***C08K 5/5399*** (2006.01) ***C08L 75/04*** (2006.01)
***C08J 9/00*** (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

# (54) FLAMMGESCHÜTZTE PUR/PIR - HARTSCHAUMSTOFFE

(57) Die vorliegende Erfindung betrifft flammgeschützte Polyurethan - Hartschaumstoffe bzw. Polyurethan/ Polyisocyanurat - Hartschaumstoffe mit cyclischen Phosphazenen, sowie ein Verfahren zur Herstellung von Polyurethan-Hartschaumstoffen durch die Umsetzung eines Reaktionsgemisches enthaltend

**A** eine Isocyanat-reaktive Komponente
**B** eine Isocyanatkomponente
**C** Treibmittel
**D** Katalysator
**E** gegebenenfalls Additiv
**F** Flammschutzmittel,

dadurch gekennzeichnet, dass das Flammschutzmittel **F** ein cyclisches Phosphazen gemäß der Formel (I) enthält

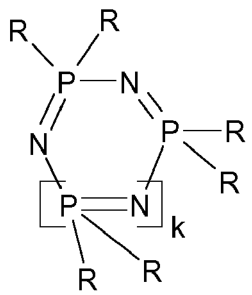

(I),

wobei

R

jeweils gleich oder verschieden ist und für einen Aminrest, jeweils, gegebenenfalls halogeniertes, vorzugsweise mit Fluor halogeniertes, $C_1$- bis $C_8$-Alkyl, vorzugsweise Methyl, Ethyl, Propyl oder Butyl, jeweils, gegebenenfalls halogeniertes, vorzugsweise mit Fluor halogeniertes, weiter bevorzugt monohalogeniertes $C_1$- bis $C_8$-Alkoxy, vorzugsweise Methoxy, Ethoxy, Propoxy oder Butoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, jeweils gegebenenfalls durch Alkyl, vorzugsweise $C_1$-$C_4$-Alkyl, und/oder Halogen, vorzugsweise Chlor, Brom und/oder Hydroxy-substituiertes, $C_6$- bis $C_{20}$-Aryloxy, vorzugsweise Phenoxy, Naphthyloxy, jeweils gegebenenfalls durch Alkyl, vorzugsweise $C_1$-$C_4$-Alkyl, und/oder Halogen, vorzugsweise Chlor und/oder Brom, substituiertes $C_7$- bis $C_{12}$-Aralkyl, vorzugsweise Phenyl-$C_1$-$C_4$-alkyl, oder einen Halogen-Rest, vorzugsweise Chlor, oder einen OH-Rest steht; und

k

für 1 oder eine ganze Zahl von 1 bis 10, vorzugsweise für eine Zahl von 1 bis 8, besonders bevorzugt 1 bis 5, steht.

EP 3 428 210 A1

**Beschreibung**

Die vorliegende Erfindung betrifft flammgeschützte Polyurethan-Hartschaumstoffe bzw. Polyurethan/Polyisocyanurat-Hartschaumstoffe (im Folgenden einzeln oder gemeinsam auch als "PUR/PIR-Hartschaumstoffe" bezeichnet) mit cyclischen Phosphazenen, sowie Verfahren zu ihrer Herstellung und die Verwendung von cyclischen Phosphazenen als Flammschutzmittel in System zur Herstellung von PUR/PIR-Hartschaumstoffen.

So wie alle organischen Polymere sind auch PUR/PIR-Hartschaumstoffe brennbar, wobei die große Oberfläche pro Masseneinheit in Schaumstoffen dieses Verhalten noch verstärkt. PUR/PIR-Hartschaumstoffe werden häufig als Isolationsmaterialien eingesetzt, beispielsweise als Dämmstoff in der Bauindustrie. In vielen Einsatzgebieten von PUR/PIR-Hartschaumstoffen ist daher eine Brandschutzausrüstung durch zugesetzte Flammschutzmittel erforderlich. Es gibt dabei Flammschutzmittel, die die Flamme in der Gasphase ersticken und es gibt Flammschutzmittel, die die Oberfläche des polymeren Werkstoffes schützen, indem sie die Verkohlung fördern oder einen glasartigen Überzug bilden. Als Flammschutzmittel werden halogenhaltige Verbindungen sowie Stickstoff- und Phosphorverbindungen bevorzugt eingesetzt. Verbindungen, die Halogene enthalten, und niedervalente Phosphorverbindungen gelten als typische Vertreter der Flammschutzmittel, die Flammen ersticken. Höhervalente Phosphorverbindungen sollen eine katalytische Spaltung der Polyurethane bewirken und dadurch zur Bildung einer festen, polyphosphathaltigen, verkohlten Oberfläche führen. Diese Intumeszenzschicht schützt das Material vor weiterer Verbrennung (G.W. Becker, D. Braun: Polyurethane. In: G. Oertel (Ed.), Kunststoff Handbuch, München, Carl Hanser Verlag, 1983, 2, 104-1-5).

Ein Nachteil insbesondere der halogenhaltigen Vertreter dieser Klassen ist allerdings, dass sie giftig und relativ flüchtig sind und so aus dem Schaumstoff migrieren können (J.C. Quagliano, V.M. Wittemberg, I.C.G. Garcia: Recent Advances on the Utilization of Nanoclays and Organophosphorus Compounds in Polyurethane Foams for Increasing Flame Retardancy. In: J. Njuguna (Ed.), Structural Nanocomposites, Engineering Materials, Berlin Heidelberg, Springer Verlag, 2013, 1, 249-258).

Aufgrund der zunehmenden Verbreitung von organischen Halogenverbindungen mit teilweise gesundheitsschädlicher Wirkung in der Umwelt richtet sich das Interesse auf halogenfreie Alternativen, z.B. auf halogenfreie Phosphatester und Phosphitester (S.V. Levchik, E.D. Weil: A Review of Recent Progress in Phosphorus-based Flame Retardants, J. Fire Sci., 2006, 24, 345-364) und auf roten Phosphor.

Aber auch diese halogenfreien Alternativen haben Nachteile: Teilweise sind sie empfindlich gegenüber Hydrolyse unter den für PUR/PIR-Hartschaumstoffen typischen alkalischen Bedingungen, oder die Wirksamkeit ist nicht zufriedenstellend. Roter Phosphor weist Nachteile auf, z.B. im Hinblick auf schnelle Absorption von Feuchtigkeit und schnelle Oxidation, was zu einem Verlust des Flammschutzes und ggf. zur Bildung giftiger Phosphine führt, und neigt außerdem zu Pulverexplosionen. Oft wird roter Phosphor mikroverkapselt um diese Probleme zu beseitigen. (L. Chen, Y.-Z. Wang: A review on flame retardant technology in China. Part 1: development of flame retardants, Polym. Adv. Technol., 2010, 21, 1-26).

Phosphazene sind hybride anorganisch/organische Materialien, die als lineare und cyclische Molekülstrukturen vorkommen (S.-Y. Lu, I. Hammerton: Recent developments in the chemistry of halogen-free flame retardant polymers, Prog. Polym. Sci., 2002, 27, 1661-1721). Der Einsatz von cyclischen Phosphazenen als Flammschutzmittel in thermoplastischen Kunstoffen ist bekannt, z.B. in Polyamiden (US 2012/0289634 A1, WO 2012/098185 A) oder in Polycarbonaten (WO 2014/086800 A).

Für Polyurethan-Schaumstoffe wird beispielsweise in CN 103992353 A der Einbau eines cyclischen Phosphazens mit der Formel $[N_3P_3(O(CH_2)_4OH)_6]$ beschrieben.

CN 102816186 A stellt die Herstellung von Polyurethan-Schaumstoffen auf Basis von cyclischen Phosphazenen mit $[N_3P_3(OZOH)_6]$ dar, wobei Z für die Gruppen $-(CH_2)_2-$,$-CH(CH_3)CH_2-$, $-(CH_2)_2-O-(CH_2)_2-$ und $-(C_3H_6)_2-O-(C_3H_6)_2-$ steht.

Durch den Einbau von Phosphazenen in PUR/PIR-Hartschäumen kann ein im Brandfall sich selbstverlöschender Polyurethan-Schaumstoff erhalten werden (L. Chen, Y.-Z. Wang: A review on flame retardant technology in China. Part 1: development of flame retardants, Polym. Adv. Technol., 2010, 21, 1-26. und C. S. Reed, J. P. Taylor, K. S. Guigley, M. M. Coleman, H. R. Allcock: Polyurethane/Poly[bis(carboxylatophenoxy)phosphazene] Blends and Their Potential as Flame-Retardant Materials, Polym. Eng. Sci., 2000, 40, 465-472) und durch den Austausch von Polyolbausteinen im Polymergerüst durch Phosphazene ein verbessertes Verhalten von PUR/PIR-Hartschaumstoffen beim Einwirken von Flammen nachgewiesen werden (M. Modesti, L. Zanella, A. Lorenzetti, R. Bertani, M. Gleria: Thermally stable hybrid foams based on cyclophosphazenes and polyurethanes, Polym. Degrad. Stab., 2005, 87, 287-292).

Dabei werden die verbesserten Brandeigenschaften in den vorher genannten Veröffentlichungen jedoch durch einen sehr hohen Gewichtsanteil an Phosphazen erhalten, bis zu einem kompletten Aufbau des Polyols durch Phosphazenderivate.

Weiterhin sind Phosphazene, die über Isocyanat-reaktive Gruppen in eine Polyurethanmatrix eingebaut werden können, nur über mehrere Stufen aufwendig herzustellen, weil sie Schutzgruppenstrategien nutzen (CN 102766167 A, CN 102766168 A und N.N. Reed, K. D. Janda: Stealth Star Polymers: A New High-Loading Scaffold for Liquid-Phase

Organic Synthesis, Org. Lett., 2000, 2, 1311-1313).

Die Aufgabe der vorliegenden Erfindung ist es, die Herstellung von PUR/PIR-Hartschaumstoffen mit halogenfreien Flammschutzmitteln zu ermöglichen, wobei die PUR/PIR-Hartschaumstoffe mit halogenfreien Flammschutzmitteln trotzdem einen guten Flammschutz aufweisen und ähnlich niedrige Rohdichten wie PUR/PIR-Hartschaumstoffe mit halogenhaltigen Flammschutzmitteln besitzen.

Diese Aufgabe konnte gelöst werden durch den erfindungsgemäßen Einsatz von cyclischen Phosphazenen gemäß der Formel (I) als Flammschutzmittelkomponente in der Herstellung von PUR/PIR-Hartschaumstoffen.

Gegenstand der Erfindung ist ein Verfahren zur Herstellung von PUR/PIR-Hartschaumstoffen durch die Umsetzung eines Reaktionsgemisches enthaltend

**A** eine Isocyanat-reaktive Komponente

**B eine** Isocyanatkomponente

**C** Treibmittel

**D** Katalysator

**E** gegebenenfalls Additiv

**F** Flammschutzmittel,

dadurch gekennzeichnet, dass das Flammschutzmittel **F** ein cyclisches Phosphazen gemäß der Formel (I) enthält

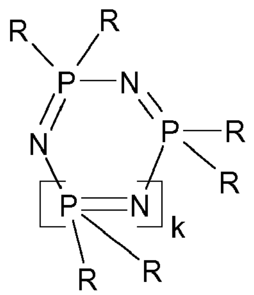

(I),

wobei

R jeweils gleich oder verschieden ist und für einen Aminrest, jeweils, gegebenenfalls halogeniertes, vorzugsweise mit Fluor halogeniertes, $C_1$- bis $C_8$-Alkyl, vorzugsweise Methyl, Ethyl, Propyl oder Butyl, jeweils, gegebenenfalls halogeniertes, vorzugsweise mit Fluor halogeniertes, weiter bevorzugt monohalogeniertes $C_1$- bis $C_8$-Alkoxy, vorzugsweise Methoxy, Ethoxy, Propoxy oder Butoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, jeweils gegebenenfalls durch Alkyl, vorzugsweise $C_1$-$C_4$-Alkyl, und/oder Halogen, vorzugsweise Chlor, Brom und/oder Hydroxy-substituiertes, $C_6$- bis $C_{20}$-Aryloxy, vorzugsweise Phenoxy, Naphthyloxy, jeweils gegebenenfalls durch Alkyl, vorzugsweise $C_1$-$C_4$-Alkyl, und/oder Halogen, vorzugsweise Chlor und/oder Brom, substituiertes $C_7$- bis $C_{12}$-Aralkyl, vorzugsweise Phenyl-$C_1$-$C_4$-alkyl, oder einen Halogen-Rest, vorzugsweise Chlor, oder einen OH-Rest steht; und

k für 1 oder eine ganze Zahl von 1 bis 10, vorzugsweise für eine Zahl von 1 bis 8, besonders bevorzugt 1 bis 5, steht.

Überraschenderweise wurde gefunden, dass nicht nur die Brandschutzeigenschaften der erfindungsgemäßen PUR/PIR-Hartschaumstoffe mit cyclischem Phosphazen gemäß Formel (I) als Flammschutzmittel verbessert werden, sondern auch bei der Verwendung von Flammschutzmittelgemischen enthaltend cyclisches Phosphazen gemäß Formel (I) und halogenfreies Flammschutzmittel, welches einen Siedepunkt ≤ 220 °C aufweist, die Rohdichte der PUR/PIR-Hartschaumstoffe gegenüber vergleichbaren Flammschutzmittelgemischen verringert wird.

Als Isocyanat-reaktive Komponente **A** wird mindestens ein Polyol ausgewählt aus der Gruppe bestehend aus Polyetherpolyolen, Polyesterpolyolen, Polyetheresterpolyolen, Polycarbonatpolyolen und Polyether-Polycarbonatpolyolen eingesetzt. Bevorzugt sind Polyesterpolyole und/oder Polyetherpolyole. Die einzelne Polyolkomponente kann bevorzugt eine Hydroxylzahl zwischen 25 bis 800 mg KOH/g, insbesondere 50 bis 500 mg KOH/g und besonders bevorzugt

120 bis 350 mg KOH/g aufweisen. Vorzugsweise weist die einzelne Polyolkomponente ein zahlenmittleres Molekulargewicht von 120 g/mol bis 6000 g/mol, insbesondere 400 g/mol bis 2000 g/mol und besonders bevorzugt 500 g/mol bis 1000 g/mol auf.

Die zahlenmittlere Molmasse $M_n$ (auch: Molekulargewicht) wird im Rahmen dieser Erfindung durch Gelpermeationschromatographie nach DIN 55672-1 (August 2007) bestimmt.

Die OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Die OH-Zahl wird im Rahmen der vorliegenden Erfindung nach der Norm DIN 53240-1 (Juni 2013) bestimmt.

Die Polyesterpolyole der Komponente **A** können beispielsweise Polykondensate aus mehrwertigen Alkoholen, vorzugsweise Diolen, mit 2 bis 12 Kohlenstoffatomen, vorzugsweise mit 2 bis 6 Kohlenstoffatomen, und Polycarbonsäuren, wie z.B. Di-, Tri- oder sogar Tetracarbonsäuren, oder Hydroxycarbonsäuren oder Lactonen sein, bevorzugt werden aromatische Dicarbonsäuren oder Gemische aus aromatischen und aliphatischen Dicarbonsäuren verwendet. Anstelle der freien Polycarbonsäuren können auch die entsprechenden Polycarbonsäureanhydride oder entsprechende Polycarbonsäureester von niederen Alkoholen zur Herstellung der Polyester verwendet werden. Bevorzugt verwendet werden Phthalsäureanhydrid, Terephthalsäure und/oder Isophthalsäure.

Als Carbonsäuren kommen insbesondere in Betracht: Bernsteinsäure, Glutarsäure, Adipinsäure, Korksäure, Azelainsäure, Sebazinsäure, Decandicarbonsäure, Tetrahydrophthalsäure, Hexahydrophthalsäure, Cyclohexandicarbonsäure, Tetrachlorphthalsäure, Itaconsäure, Malonsäure, 2-Methylbernsteinsäure, 3,3-Diethylglutarsäure, 2,2-Dimethylbernsteinsäure, Dodekandisäure, Endomethylentetrahydrophthalsäure, Dimerfettsäure, Trimerfettsäure, Zitronensäure, Trimellithsäure, Benzoesäure, Trimellitsäure, Maleinsäure, Fumarsäure, Phthalsäure, Isophthalsäure und Terephthalsäure. Verwendet werden können ebenso Derivate dieser Carbonsäuren, wie beispielsweise Dimethylterephthalat. Die Carbonsäuren können dabei sowohl einzeln als auch im Gemisch verwendet werden. Als Carbonsäuren werden bevorzugt Adipinsäure, Sebacinsäure und/oder Bernsteinsäure, besonders bevorzugt Adipinsäure und/oder Bernsteinsäure, verwendet.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind unter anderem Caprolacton, Butyrolacton und Homologe.

Zur Herstellung der Polyesterpolyole kommen insbesondere auch biobasierte Ausgangsstoffe und/oder deren Derivate in Frage, wie z. B. Rizinusöl, Polyhydroxyfettsäuren, Ricinolsäure, Hydroxyl-modifizierte Öle, Weintraubenkernöl, schwarzem Kümmelöl, Kürbiskernöl, Borretschsamenöl, Sojabohnenöl, Weizensamenöl, Rapsöl, Sonnenblumenkernöl, Erdnussöl, Aprikosenkernöl, Pistazienöl, Mandelöl, Olivenöl, Macadamianussöl, Avocadoöl, Sanddornöl, Sesamöl, Hanföl, Haselnussöl, Primelöl, Wildrosenöl, Distelöl, Walnussöl, Fettsäuren, hydroxylmodifizierte und epoxidierte Fettsäuren und Fettsäureester, beispielsweise basierend auf Myristoleinsäure, Palmitoleinsäure, Ölsäure, Vaccensäure, Petroselinsäure, Gadoleinsäure, Erukasäure, Nervonsäure, Linolsäure, alpha- und gamma-Linolensäure, Stearidonsäure, Arachidonsäure, Timnodonsäure, Clupanodonsäure und Cervonsäure. Insbesondere bevorzugt sind Ester der Rizinolsäure mit mehrfunktionellen Alkoholen, z.B. Glycerin. Bevorzugt ist auch die Verwendung von Mischungen solcher biobasierten Säuren mit anderen Carbonsäuren, z.B. Phthalsäuren.

Beispiele für geeignete Diole sind Ethylenglykol, Butylenglykol, Diethylenglykol, Triethylenglykol, Polyalkylenglykole wie Polyethylenglykol, weiterhin 1,2-Propandiol, 1,3-Propandiol, 1,3-Butandiol, 1,4-Butandiol, 1,6-Hexandiol und Isomere, Neopentylglykol oder Hydroxypivalinsäureneopentylglykolester. Vorzugsweise verwendet werden Ethylenglykol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol.

Daneben können auch Polyole wie Trimethylolpropan, Glycerin, Erythrit, Pentaerythrit, Trimethylolbenzol oder Trishydroxyethylisocyanurat eingesetzt werden, wobei Glycerin und Trimethylolpropan bevorzugt sind.

Es können zusätzlich auch einwertige Alkanole mit verwendet werden.

Erfindungsgemäß eingesetzte Polyetherpolyole werden nach dem Fachmann bekannten Herstellungsmethoden erhalten, wie beispielsweise durch anionische Polymerisation von einem oder mehreren Alkylenoxiden mit 2 bis 4 Kohlenstoffatomen mit Alkalihydroxiden, wie Natrium- oder Kaliumhydroxid, Alkalialkoholaten, wie Natriummethylat, Natrium- oder Kaliumethylat oder Kaliumisopropylat, oder aminischen Alkoxylierungs-Katalysatoren, wie Dimethylethanolamin (DMEOA), Imidazol und/oder Imidazolderivate, unter Verwendung mindestens eines Startermoleküls, das 2 bis 8, vorzugsweise 2 bis 6 reaktive Wasserstoffatome gebunden enthält.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugte Alkylenoxide sind Propylenoxid und Ethylenoxid, besonders bevorzugt ist Ethylenoxid. Die Alkylenoxide können in Kombination mit $CO_2$ umgesetzt werden.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 2,2'-, 2,4'- und 4,4'-Diaminodiphenylmethan.

Vorzugsweise verwendet werden zwei oder mehrwertige Alkohole, wie Ethandiol, 1,2- und 1,3-Propandiol, Diethylenglykol, Dipropylenglykol, 1,4-Butandiol, 1,6-Hexandiol, Triethanolamin, Bisphenole, Glycerin, Trimethylolpropan, Pentaerythrit, Sorbit und Saccharose.

Verwendbare Polycarbonatpolyole sind Hydroxylgruppen aufweisende Polycarbonate, zum Beispiel Polycarbonatdiole. Diese entstehen in der Reaktion von Kohlensäurederivaten, wie Diphenylcarbonat, Dimethylcarbonat oder Phosgen, mit Polyolen, bevorzugt Diolen.

Beispiele derartiger Diole sind Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenole und lactonmodifizierte Diole der vorstehend genannten Art.

Statt oder zusätzlich zu reinen Polycarbonatdiolen können auch Polyether-Polycarbonatdiole eingesetzt werden, welche beispielsweise durch Copolymerisation von Alkylenoxiden, wie zum Beispiel Propylenoxid, mit $CO_2$ erhältlich sind.

Verwendbare Polyetheresterpolyole sind solche Verbindungen, die Ethergruppen, Estergruppen und OH-Gruppen enthalten. Organische Dicarbonsäuren mit bis zu 12 Kohlenstoffatomen sind zur Herstellung der Polyetheresterpolyole geeignet, vorzugsweise aliphatische Dicarbonsäuren mit 4 bis 6 Kohlenstoffatomen oder aromatische Dicarbonsäuren, die einzeln oder im Gemisch verwendet werden. Beispielhaft seien Korksäure, Azelainsäure, Decandicarbonsäure, Maleinsäure, Malonsäure, Phthalsäure, Pimelinsäure und Sebacinsäure sowie insbesondere Glutarsäure, Fumarsäure, Bernsteinsäure, Adipinsäure, Phthalsäure, Terephthalsäure und Isoterephthalsäure genannt. Neben organischen Dicarbonsäuren können auch Derivate dieser Säuren, beispielsweise deren Anhydride sowie deren Ester und Halbester mit niedermolekularen, monofunktionellen Alkoholen mit 1 bis 4 Kohlenstoffatomen eingesetzt werden. Der anteilige Einsatz der oben genannten biobasierten Ausgangsstoffe, insbesondere von Fettsäuren bzw. Fettsäurederivaten (Ölsäure, Sojaöl etc.) ist ebenfalls möglich und kann Vorteile aufweisen, z.B. im Hinblick auf Lagerstabilität der Polyolformulierung, Dimensionsstabilität, Brandverhalten und Druckfestigkeit der Schäume.

Als weitere Komponente zur Herstellung der Polyetheresterpolyole werden Polyetherpolyole eingesetzt, die man durch Alkoxylieren von Startermolekülen wie mehrwertigen Alkoholen erhält. Die Startermoleküle sind mindestens difunktionell, können aber gegebenenfalls auch Anteile höherfunktioneller, insbesondere trifunktioneller, Startermoleküle enthalten.

Startermoleküle sind zum Beispiel Diole wie 1,2-Ethandiol, 1,3-Propandiol, 1,2-Propandiol, 1,4-Butandiol, 1,5-Pentendiol, 1,5-Pentandiol, Neopentylglykol, 1,6-Hexandiol, 1,7-Heptandiol, 1,8-Octandiol, 1,10-Decandiol, 2-Methyl-1,3-propandiol, 2,2-Dimethyl-1,3-propandiol, 3-Methyl-1,5-pentandiol, 2-Butyl-2-ethyl-1,3-propandiol, 2-Buten-1,4-diol und 2-Butin-1,4-diol, Etherdiole wie Diethylenglykol, Triethylenglykol, Tetraethylenglykol, Dibutylenglykol, Tributylenglykol, Tetrabutylenglykol, Dihexylenglykol, Trihexylenglykol, Tetrahexylenglykol und Oligomerengemische von Alkylenglykolen, wie Diethylenglykol. Auch Startermoleküle mit von OH verschiedenen Funktionalitäten können alleine oder in Mischung eingesetzt werden.

"Funktionalität" bezeichnet im Rahmen der vorliegenden Erfindung die theoretische, aus den bekannten Einsatzstoffen und deren Mengenverhältnissen berechnete mittlere Funktionalität (Anzahl an gegenüber Isocyanaten bzw. gegenüber Polyolen reaktiven Funktionen im Molekül).

Neben den Diolen können als Startermoleküle für die Herstellung der Polyether auch Verbindungen mit mehr als 2 Zerewitinoff-aktiven Wasserstoffen, besonders mit zahlenmittleren Funktionalitäten von 3 bis 8, insbesondere von 3 bis 6 mitverwendet werden, zum Beispiel 1,1,1-Trimethylolpropan, Triethanolamin, Glycerin, Sorbitan und Pentaerythrit sowie auf Triolen oder Tetraolen gestartete Polyethylenoxidpolyole.

Polyetheresterpolyole können auch durch die Alkoxylierung, insbesondere durch Ethoxylierung und/oder Propoxylierung, von Reaktionsprodukten, die durch die Umsetzung von organischen Dicarbonsäuren und deren Derivaten sowie Komponenten mit Zerewitinoff-aktiven Wasserstoffen, insbesondere Diolen und Polyolen, erhalten werden, hergestellt werden. Als Derivate dieser Säuren können beispielsweise deren Anhydride eingesetzt werden, wie zum Beispiel Phthalsäureanhydrid.

Herstellungsverfahren der Polyole sind beispielsweise von Ionescu in "Chemistry and Technology of Polyols for Polyurethanes", Rapra Technology Limited, Shawbury 2005, S.55 ff. (Kap. 4: Oligo-Polyols for Elastic Polyurethanes), S. 263 ff. (Kap. 8: Polyester Polyols for Elastic Polyurethanes) und insbesondere auf S.321 ff. (Kap. 13: Polyether Polyols for Rigid Polyurethane Foams) und S.419 ff. (Kap. 16: Polyester Polyols for Rigid Polyurethane Foams) beschrieben

worden. Es ist auch möglich, Polyester- und Polyetherpolyole über Glykolyse von geeigneten Polymer-Rezyklaten zu gewinnen. Geeignete Polyether-Polycarbonatpolyole und ihre Herstellung werden beispielsweise in der EP 2 910 585 A1, [0024]-[0041], beschrieben. Beispiele zu Polycarbonatpolyolen und ihre Herstellung finden sich unter anderem in der EP 1 359 177 A1. Die Herstellung geeigneter Polyetheresterpolyole ist unter anderem in der WO 2010/043624 A und in der EP 1 923 417 A beschrieben.

Weiterhin können in der Isocyanat-reaktiven Komponente **A** niedermolekulare Isocyanat-reaktive Verbindungen enthalten sein, insbesondere können di- oder trifunktionelle Amine und Alkohole, besonders bevorzugt Diole und/oder Triole mit Molmassen $M_n$ kleiner als 400 g/mol, vorzugsweise von 60 bis 300 g/mol, zum Einsatz kommen, z.B. Triethanolamin, Diethylenglykol, Ethylenglykol und Glycerin. Sofern zur Herstellung der Polyurethan-Hartschaumstoffe solche niedermolekularen Isocyanat-reaktiven Verbindungen Anwendung finden, z.B. in der Funktion als Kettenverlängerungsmittel und/oder Vernetzungsmittel kommen diese zweckmäßigerweise in einer Menge von bis zu 5 Gew.-%, bezogen auf das Gesamtgewicht der Komponente **A,** zum Einsatz.

Neben den oben beschriebenen Polyolen und Isocyanat-reaktiven Verbindungen können in der Komponente **A** weitere Isocyanat-reaktive Verbindungen enthalten sein, beispielsweise Graft-Polyole, Polyamine, Polyaminoalkohole und Polythiole. Selbstverständlich umfassen die beschriebenen Isocyanat-reaktiven Komponenten auch solche Verbindungen mit gemischten Funktionalitäten.

Die Komponente **A** kann aus einer oder mehreren der oben genannten Isocyanat-reaktiven Komponenten bestehen.

Als geeignete Isocyanatkomponente **B** kommen z. B. Polyisocyanate, d. h. Isocyanate mit einer NCO-Funktionalität von mindestens 2, in Frage. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, die isomeren Bis(4,4'- isocyanatocyclohexyl)methane oder deren Mischungen beliebigen Isomerengehalts, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'- und/oder 2,4'- und/oder 4,4'-Diphenylmethandiisocyanat (MDI) und/oder höhere Homologe (polymeres MDI), 1,3- und/oder 1,4-Bis-(2-isocyanato-prop-2-yl)-benzol (TMXDI), 1,3-Bis-(isocyanatomethyl)benzol (XDI), sowie Alkyl-2,6-diisocyanatohexanoate (Lysindiisocyanate) mit C1- bis C6-Alkylgruppen. Bevorzugt wird die Isocyanatkomponente **B** ausgewählt aus mindestens einer Verbindung aus der Gruppe bestehend aus MDI, polymeres MDI und TDI.

Neben den vorstehend genannten Polyisocyanaten können anteilig auch modifizierte Diisocyanate mit Uretdion-, Isocyanurat-, Urethan-, Carbodiimid-, Uretonimin-, Allophanat-, Biuret-, Amid-, Iminooxadiazindion- und/oder Oxadiazintrionstruktur sowie nicht-modifiziertes Polyisocyanat mit mehr als 2 NCO-Gruppen pro Molekül, wie zum Beispiel 4-Isocyanatomethyl-1,8-octandüsocyanat (Nonantriisocyanat) oder Triphenylmethan-4,4',4''-triisocyanat, mit eingesetzt werden.

Statt oder zusätzlich zu den oben genannten Polyisocyanaten können auch geeignete NCO-Präpolymere als Isocyanatkomponente **B** eingesetzt werden. Die Präpolymere sind herstellbar durch Umsetzung eines oder mehrerer Polyisocyanate mit einem oder mehreren Polyolen, entsprechend den unter den Isocyanat-reaktiven Komponenten **A** beschriebenen Polyolen.

Unter der Isocyanat-Kennzahl (auch Kennzahl oder Isocyanat-Index genannt) wird der Quotient aus der tatsächlich eingesetzten Stoffmenge [Mol] an Isocyanat-Gruppen und der tatsächlich eingesetzten Stoffmenge [Mol] an Isocyanat-reaktiven Gruppen, multipliziert mit 100, verstanden:

$$\text{Kennzahl} = (\text{Mole Isocyanat-Gruppen} / \text{Mole Isocyanat-reaktive Gruppen}) * 100$$

Es ist möglich, dass im Reaktionsgemisch die Anzahl der NCO-Gruppen im Isocyanat und die Anzahl der gegenüber Isocyanaten reaktiven Gruppen zu einer Kennzahl (Index) von 90 bis 600 führen, bevorzugt zwischen 115 und 400. Diese Kennzahl liegt bevorzugt in einem Bereich von 150 bis 450 in dem ein hoher Anteil an Polyisocyanuraten (PIR) vorliegt (der Hartschaumstoff wird als PIR-Hartschaumstoff oder PUR/PIR-Hartschaumstoff bezeichnet) und zu einer höheren Flammwidrigkeit des PUR/PIR-Hartschaumstoffes selbst führt. Ein anderer bevorzugter Bereich für die Isocyanat-Kennzahl ist der Wertebereich von 90 bis 150 (der Hartschaumstoff wird als Polyurethanhartschaumstoff (PUR-Hartschaumstoff) bezeichnet) in dem der PUR/PIR-Hartschaumstoff zum Beispiel zu geringerer Sprödigkeit neigt.

Der NCO-Wert (auch: NCO-Gehalt, Isocyanatgehalt) wird bestimmt mittels EN ISO 11909 (Mai 2007). Falls nicht anders angegeben, handelt es sich um die Werte bei 25°C.

Die Komponente **B** kann aus einer oder mehreren der oben genannten Isocyanatkomponenten bestehen.

Als Treibmittel C kann physikalisches Treibmittel eingesetzt werden, wie beispielsweise niedrig siedende organische Verbindungen wie z. B. Kohlenwasserstoffe, halogenierte Kohlenwasserstoffe, Ether, Ketone, Carbonsäureester oder Kohlensäureester. Geeignet sind insbesondere organische Verbindungen, welche gegenüber der Isocyanatkomponente **B** inert sind und Siedepunkte unter 100 °C, vorzugsweise unter 50 °C bei Atmosphärendruck aufweisen.

Diese Siedepunkte haben den Vorteil, dass die organischen Verbindungen unter dem Einfluss der exothermen Polyadditionsreaktion verdampfen. Beispiele solcher, vorzugsweise verwendeten organischen Verbindungen sind Alkane, wie Heptan, Hexan, n- und iso-Pentan, vorzugsweise technische Gemische aus n- und iso-Pentanen, n- und iso-Butan und Propan, Cycloalkane, wie z.B. Cyclopentan und/oder Cyclohexan, Ether, wie z. B. Furan, Dimethylether und Diethylether, Ketone, wie z. B. Aceton und Methylethylketon, Carbonsäurealkylester, wie z. B. Methylformiat, Dimethyloxalat und Ethylacetat und halogenierte Kohlenwasserstoffe, wie z. B. Methylenchlorid, Dichlormonofluormethan, Difluormethan, Trifluormethan, Difluorethan, Tetrafluorethan, Chlordifluorethane, 1,1-Dichlor-2,2,2-trifluorethan, 2,2-Dichlor-2-fluorethan und Heptafluorpropan. Auch bevorzugt ist der Einsatz von (hydro)fluorierten Olefinen, wie z. B. HFO 1233zd(E) (Trans-1-chlor-3,3,3-trifluor-1-propen) oder HFO 1336mzz(Z) (cis-1,1,1,4,4,4-Hexafluor-2-buten) oder Additive wie FA 188 von 3M (1,1,1,2,3,4,5,5,5-Nonafluor-4-(trifluormethyl)pent-2-en). Auch Gemische zweier oder mehrerer der genannten organischen Verbindungen können verwendet werden. Die organischen Verbindungen können dabei auch in Form einer Emulsion aus kleinen Tröpfchen eingesetzt werden.

Als Treibmittel **C** kann auch chemisches Treibmittel, wie beispielsweise Wasser, Carbonsäure und deren Gemische, verwendet werden. Diese reagieren mit Isocyanatgruppen unter Bildung des Treibgases, wie beispielsweise im Falle von Wasser entsteht dabei Kohlendioxid und im Falle von z. B. Ameisensäure entsteht dabei Kohlendioxid und Kohlenstoffmonoxid. Als Carbonsäure wird bevorzugt mindestens eine Verbindung, ausgewählt aus der Gruppe bestehend aus Ameisensäure, Essigsäure, Oxalsäure und Ricinolsäure, eingesetzt. Als chemisches Treibmittel wird besonders bevorzugt Wasser eingesetzt.

Vorzugsweise werden keine halogenierten Kohlenwasserstoffe als Treibmittel verwendet.

Als Treibmittel **C** wird mindestens eine Verbindung, ausgewählt aus der Gruppe bestehend aus physikalischen und chemischen Treibmittel, eingesetzt. Bevorzugt wird nur physikalisches Treibmittel eingesetzt.

Als Katalysator **D** zur Herstellung der PUR/PIR-Hartschaumstoffe werden Verbindungen verwendet, welche die Reaktion der reaktiven Wasserstoffatome, insbesondere Hydroxylgruppen enthaltenden Verbindungen mit der Isocyanatkomponente **B** beschleunigen, wie z. B. tertiäre Amine oder Metallsalze. Die Katalysatorkomponenten können dem Reaktionsgemisch zudosiert oder auch ganz oder teilweise in der Isocyanat-reaktiven Komponente **A** vorgelegt werden.

Verwendet werden beispielsweise tertiäre Amine, wie Triethylamin, Tributylamin, Dimethylbenzylamin, Dicyclohexylmethylamin, Dimethylcyclohexylamin, N, N ,N', N'-Tetramethyldiaminodiethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N,N-Tetramethylbutandiamin, N, N, N, N-Tetramethylhexandiamin-1,6, Pentamethyldiethylentriamin, Bis[2-(dimethylamino)ethyl]ether, Dimethylpiperazin, N-Dimethylaminoethylpiperidin, 1,2-Dimethyl-imidazol, 1-Azabicyclo-(3,3,0)-octan, 1,4-Diaza-bi-cyclo-(2,2,2)-octan (Dabco) und Alkanolaminverbindungen, wie Triethanolamin, Triisopropanolamin, N-Methyl- und N-Ethyldiethanolamin, Dimethylaminoethanol, 2-(N,N-Dimethylaminoethoxy)ethanol, N,N',N"-Tris-(dialkylaminoalkyl)hexahydrotriazin, z.B. N,N',N"-Tris-(dimethylaminopropyl)hexahydrotriazin und Triethylendiamin.

Es können auch Metallsalze, wie z. B. Alkali- oder Übergangsmetallsalze eingesetzt werden. Als Übergangsmetallsalze werden beispielsweise Zink-, Wismut-, Eisen-, Blei- oder bevorzugt Zinnsalze eingesetzt. Beispiele für eingesetzte Übergangsmetallsalze sind Eisen(II)-chlorid, Zinkchlorid, Bleioctoat, Zinndioctoat, Zinndiethylhexoat und Dibutylzinndilaurat. Besonders bevorzugt ist das Übergangsmetallsalz ausgewählt aus mindestens einer Verbindung aus der Gruppe bestehend aus Zinndioctoat, Zinndiethylhexoat und Dibutylzinndilaurat. Beispiele für Alkalimetallsalze sind Alkalialkoholate, wie z. B. Natriummethylat und Kaliumisopropylat, Alkalicarboxylate, wie z. B. Kaliumacetat, sowie Alkalimetallsalze von langkettigen Fettsäuren mit 10 bis 20 C-Atomen und gegebenenfalls seitenständigen OH-Gruppen. Bevorzugt als Alkalimetallsalz werden ein oder mehrere Alkalicarboxylate eingesetzt.

Als Katalysator **D** kommen ferner in Betracht: Amidine, wie z. B. 2,3-Dimethyl-3,4,5,6-tetrahydropyrimidin, Tetraalkylammoniumhydroxide, wie z. B. Tetramethylammoniumhydroxid, Alkalihydroxide, wie z. B. Natriumhydroxid, und Tetraalkylammonium- oder Phosphoniumcarboxylate. Darüber hinaus sind Mannichbasen und Salze von Phenolen geeignete Katalysatoren.

Wird beim Verschäumen ein größerer Polyisocyanatüberschuss verwendet, kommen als Katalysatoren für die Trimerisierungsreaktion der überschüssigen NCO-Gruppen untereinander ferner in Betracht: Isocyanuratgruppen bildende Katalysatoren, beispielsweise Ammoniumionen- oder Alkalimetallsalze, speziell Ammonium- oder Alkalimetallcarboxylate, alleine oder in Kombination mit tertiären Aminen. Die Isocyanurat-Bildung führt zu besonders flammwidrigen PIR-Schaumstoffen.

Die oben genannten Katalysatoren können alleine oder in Kombination miteinander eingesetzt werden.

Gegebenenfalls können ein oder mehrere Additive als Komponenten E eingesetzt werden. Beispiele für die Komponente **E** sind oberflächenaktive Substanzen, Zellregler, Füllstoffe, Farbstoffe, Pigmente, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur der Kunststoffe zu

regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxanoxalkylen-Mischpolymerisate und andere Organopolysiloxane, oxethylierte Alkylphenole, oxethylierte Fettalkohole, Paraffinöle, Rizinusöl- bzw. Ricinolsäureester, Türkischrotöl und Erdnussöl, und Zellregler, wie Paraffine, Fettalkohole und Dimethylpolysiloxane.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu nennen. Im Einzelnen seien beispielhaft genannt: anorganische Füllstoffe wie silikatische Mineralien, beispielsweise Schichtsilikate wie z. B. Antigorit, Serpentin, Hornblenden, Amphibole, Chrisotil, Montmorillonit und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a. sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kolophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und Kohlenstofffasern.

Die gemäß der vorliegenden Erfindung als Flammschutzmittel F eingesetzten Phosphazene sind cyclische Phosphazene gemäß der Formel (I)

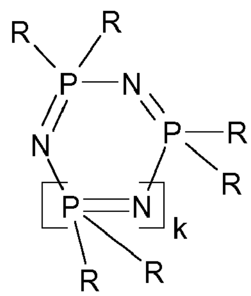

(I),

wobei

R jeweils gleich oder verschieden ist und für einen Aminrest, jeweils, gegebenenfalls halogeniertes, vorzugsweise mit Fluor halogeniertes, weiter bevorzugt monohalogeniertes, C1- bis $C_8$-Alkyl, vorzugsweise Methyl, Ethyl, Propyl oder Butyl, jeweils, gegebenenfalls halogeniertes, vorzugsweise mit Fluor halogeniertes, weiter bevorzugt monohalogeniertes $C_1$- bis $C_8$- Alkoxy, vorzugsweise Methoxy, Ethoxy, Propoxy oder Butoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, jeweils gegebenenfalls durch Alkyl, vorzugsweise $C_1$-$C_4$-Alkyl, und/oder Halogen, vorzugsweise Chlor, Brom und/oder Hydroxy-substitu-iertes, $C_6$- bis $C_{20}$-Aryloxy, vorzugsweise Phenoxy, Naphthyloxy, jeweils gegebenenfalls durch Alkyl, vorzugsweise $C_1$-$C_4$-Alkyl, und/oder Halogen, vorzugsweise Chlor und/oder Brom, substituiertes $C_7$- bis $C_{12}$-Aralkyl, vorzugsweise Phenyl-$C_1$-$C_4$-alkyl, oder einen Halogen-Rest, vorzugsweise Chlor oder Fluor, oder einen OH-Rest steht; und

k für 1 oder eine ganze Zahl von 1 bis 10, vorzugsweise für eine Zahl von 1 bis 8, besonders bevorzugt 1 bis 5, steht.

Die cyclischen Phosphazene gemäß Formel (I) können allein oder als Mischung eingesetzt werden. Der Substituent R kann immer gleich sein oder 2 oder mehrere Reste in der Formel (I) können verschieden sein. Der Anteil des cyclischen Phosphazens gemäß Formel (I) am Flammschutzmittel **F** kann z. B. 10 Gew.-% bis 100 Gew.-%, bevorzugt 15 Gew.-% bis 80 Gew.-% und besonders bevorzugt 40 Gew.-% bis 60 Gew.-% betragen, jeweils bezogen auf die Gesamtmasse des Flammschutzmittels **F.** Der Anteil an cyclischen Phosphazen gemäß Formel (I) im Reaktionsgemisch, enthaltend die Komponenten **A-F** ohne **B,** kann z. B. 1 Gew.-% bis 45 Gew.-%, bevorzugt 2 Gew.-% bis 25 Gew.-%, besonders bevorzugt 7 Gew.-% bis 15 Gew.-%, betragen.

Bevorzugt ist das cyclische Phosphazen gemäß Formel (I) ausgewählt aus mindestens einer Verbindung aus der Gruppe enthaltend Propoxyphosphazen, Phenoxyphosphazen, Methoxyphenoxyphosphazen, Tolyloxyphenoxyphosphazen und Cyanophenoxyphosphazen.

Zusätzlich zu den cyclischen Phosphazenen gemäß Formel (I) können weitere Flammschutzmittel **F** wie beispielsweise Phosphate oder Phosphonate, wie z. B. Diethylethylphosphonat (DEEP), Triethylphosphat (TEP), Triphenylphosphat (TPP), Trikresylphosphat, Diphenylkresylphosphat (DPK), Dimethylmethylphosphonat (DMMP), Diethanolaminomethylphosphonsäurediethylester, 9,10-Dihydro-9-oxa-10-phosphorylphenanthrene-10-oxid (DOPO) und Dimethylpropylphosphonat (DMPP), eingesetzt werden. Weitere geeignete Flammschutzmittel **F** sind beispielsweise bromierte Ester, bromierte Ether (Ixol) oder bromierte Alkohole wie Dibromneopentylakohol, Tribromneopentylalkohol, Tetrabromphthalat Diol, sowie chlorierte Phosphate wie Tris(2-chlorethyl)phosphat, Tris-(2-chlorpropyl)phosphat (TCPP), Tris(1,3-dichlorpropyl)phosphat, Tris-(2,3-dibrompropyl)phosphat, Tetrakis-(2-chlorethyl)-ethylendiphosphat sowie handelsübliche halogenhaltige Flammschutzpolyole. Bevorzugt ist der Einsatz eines Flammschutzmittels mit einem Siedepunkt ≤ 220 °C, besonders bevorzugt Triethylphosphat. Es ist höchst bevorzugt, dass kein halogenhaltiges Flammschutzmittel eingesetzt wird.

Die Erfindung betrifft ebenfalls einen PUR/PIR-Hartschaumstoff, der durch das erfindungsgemäße Verfahren hergestellt ist.

Die Herstellung der erfindungsgemäßen PUR/PIR-Hartschaumstoffe erfolgt bevorzugt nach dem Fachmann bekannten Einstufenverfahren, bei dem die Reaktionskomponenten kontinuierlich oder diskontinuierlich miteinander zur Reaktion gebracht werden und dann anschließend entweder manuell oder durch Zuhilfenahme maschineller Einrichtungen im Hochdruck- oder Niederdruckverfahren nach Austrag auf ein Transportband oder in geeignete Formen zur Aushärtung gebracht werden. Beispiele sind in US-A 2 764 565, in G. Oertel (Hrsg.) "Kunststoff-Handbuch", Band VII, Carl Hanser Verlag, 3. Auflage, München 1993, S. 267 ff., sowie in K. Uhlig (Hrsg.) "Polyurethan Taschenbuch", Carl Hanser Verlag, 2. Auflage, Wien 2001, S. 83-102 beschrieben.

Die erfindungsgemäßen PUR/PIR-Hartschaumstoffe finden bevorzugt zur Herstellung von Verbundelementen Verwendung. Üblicherweise findet hier die Verschäumung in kontinuierlicher oder diskontinuierlicher Weise gegen mindestens eine Deckschicht statt.

Ein weiterer Gegenstand der Erfindung ist demzufolge die Verwendung eines erfindungsgemäßen PUR/PIR-Hartschaumstoffes als Isolationsschaum und/oder als Haftvermittler in Verbundelementen, wobei die Verbundelemente eine einen erfindungsgemäßen PUR/PIR-Hartschaumstoff umfassende Schicht und mindestens eine Deckschicht umfassen. Die Deckschicht wird hierbei zumindest teilweise von einer den erfindungsgemäßen PUR/PIR-Hartschaumstoff umfassenden Schicht kontaktiert. Verbundelemente der hier interessierenden Art werden auch als Sandwich-Elemente oder Dämmplatten bezeichnet und dienen in der Regel als Bauelemente für den Schallschutz, die Dämmung, zum Hallenbau oder für den Fassadenbau. Es kann sich bei den einen oder zwei Deckschichten jeweils um eine flexible Deckschicht, z.B. um eine Aluminium-Folie, Papier, Kunststoffbahnen, Multischicht-Deckschichten aus Papier und Aluminium oder aus Mineralvließ, und/oder um eine starre Deckschicht, z.B. aus Stahlblech oder bis zu 7 mm starke Spanplatten, handeln, abhängig vom Einsatzzweck der Verbundelemente.

Insbesondere sind die erfindungsgemäßen PUR/PIR-Hartschaumstoffe auch zur Herstellung von gedämmten Rohren, beispielsweise von Fernwärmerohren, geeignet. Gegenstand der Erfindung ist somit auch die Verwendung des erfindungsgemäßen PUR/PIR-Hartschaumstoffes zur Herstellung von gedämmten Rohren.

In einer ersten Ausführungsform betrifft die Erfindung ein Verfahren zur Herstellung von PUR/PIR-Hartschaumstoffen durch die Umsetzung eines Reaktionsgemisches enthaltend

**A** eine Isocyanat-reaktive Komponente

**B** eine Isocyanatkomponente

**C** Treibmittel

**D** Katalysator

**E** gegebenenfalls Additiv

**F** Flammschutzmittel,

dadurch gekennzeichnet, dass das Flammschutzmittel **F** ein cyclisches Phosphazen gemäß der Formel (I) enthält

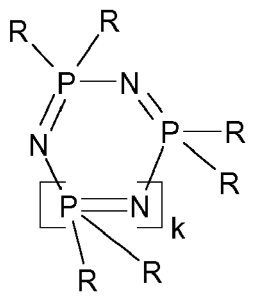

(I),

wobei

R jeweils gleich oder verschieden ist und für einen Aminrest, jeweils, gegebenenfalls halogeniertes, vorzugsweise mit Fluor halogeniertes, $C_1$- bis $C_8$-Alkyl, vorzugsweise Methyl, Ethyl, Propyl oder Butyl, jeweils, gegebenenfalls halogeniertes, vorzugsweise mit Fluor halogeniertes, weiter bevorzugt monohalogeniertes $C_1$- bis $C_8$-Alkoxy, vorzugsweise Methoxy, Ethoxy, Propoxy oder Butoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, jeweils gegebenenfalls durch Alkyl, vorzugsweise $C_1$-$C_4$-Alkyl, und/oder Halogen, vorzugsweise Chlor, Brom und/oder Hydroxy-substituiertes, $C_6$- bis $C_{20}$-Aryloxy, vorzugsweise Phenoxy, Naphthyloxy, jeweils gegebenenfalls durch Alkyl, vorzugsweise $C_1$-$C_4$-Alkyl, und/oder Halogen, vorzugsweise Chlor und/oder Brom, substituiertes $C_7$- bis $C_{12}$-Aralkyl, vorzugsweise Phenyl-$C_1$-$C_4$-alkyl, oder einen Halogen-Rest, vorzugsweise Chlor, oder einen OH-Rest steht; und

k für 1 oder eine ganze Zahl von 1 bis 10, vorzugsweise für eine Zahl von 1 bis 8, besonders bevorzugt 1 bis 5, steht.

In einer zweiten Ausführungsform betrifft die Erfindung ein Verfahren nach der ersten Ausführungsform, dadurch gekennzeichnet, dass das Treibmittel C ausgewählt ist aus einem oder mehreren Treibmitteln der Gruppe bestehend aus halogenfreien chemischen Treibmitteln, halogenfreien physikalischen Treibmitteln und (hydro)fluorierten Olefinen.

In einer dritten Ausführungsform betrifft die Erfindung ein Verfahren nach einer der Ausführungsformen 1 oder 2, dadurch gekennzeichnet, dass das Flammschutzmittel **F** kein in die Polyurethanstruktur einbaubares cyclisches Phosphazen gemäß der Formel (I) enthält.

In einer vierten Ausführungsform betrifft die Erfindung ein Verfahren nach einer der Ausführungsformen 1-3, dadurch gekennzeichnet, dass der Substituent R des cyclischen Phosphazens gemäß der Formel (I) im Flammschutzmittel **F** kein Halogen ist.

In einer fünften Ausführungsform betrifft die Erfindung ein Verfahren nach einer der Ausführungsformen 1-4, dadurch gekennzeichnet, dass das Flammschutzmittel **F** ein cyclisches Phosphazen gemäß der Formel (I) mit k = 1 enthält.

In einer sechsten Ausführungsform betrifft die Erfindung ein Verfahren nach einer der Ausführungsformen 1-5, dadurch gekennzeichnet, dass das Flammschutzmittel **F** ein cyclisches Phosphazen gemäß der Formel (I) enthält, welches ausgewählt ist aus der Gruppe bestehend aus Propoxyphosphazen, Phenoxyphosphazen, Methoxyphenoxyphosphazen, Tolyloxyphenoxyphosphazen und Cyanophenoxyphosphazen.

In einer siebten Ausführungsform betrifft die Erfindung ein Verfahren nach einer der Ausführungsformen 1-6, dadurch gekennzeichnet, dass das Flammschutzmittel **F** 10 Gew.-% bis 100 Gew.-%, bevorzugt 15 Gew.-% bis 80 Gew.-%, besonders bevorzugt 40 Gew.-% bis 60 Gew.-%, bezogen auf die Gesamtmasse des Flammschutzmittels **F,** eines cyclischen Phosphazens gemäß der Formel (I) enthält.

In einer achten Ausführungsform betrifft die Erfindung ein Verfahren nach einer der Ausführungsformen 1-7, dadurch gekennzeichnet, dass der Gehalt an cyclischen Phosphazen gemäß der Formel (I) 1 Gew.-% bis 45 Gew.-%, bevorzugt 2 Gew.-% bis 25 Gew.-%, besonders bevorzugt 7 Gew.-% bis 15 Gew.-%, bezogen auf die Reaktionsmischung **A-F** ohne **B,** beträgt.

In einer neunten Ausführungsform betrifft die Erfindung ein Verfahren nach einer der Ausführungsformen 1-8, dadurch gekennzeichnet, dass das Flammschutzmittel **F** neben einem cyclischen Phosphazen gemäß der Formel (I) ein Flammschutzmittel mit einem Siedepunkt ≤ 220 °C enthält.

In einer zehnten Ausführungsform betrifft die Erfindung ein Verfahren nach einer der Ausführungsformen 1-9, dadurch gekennzeichnet, dass das Flammschutzmittel **F** aus zwei Komponenten besteht.

In einer elften Ausführungsform betrifft die Erfindung ein Verfahren nach einer der Ausführungsformen 1-10, dadurch gekennzeichnet, dass das Flammschutzmittel **F** kein halogenhaltiges Flammschutzmittel enthält.

In einer zwölften Ausführungsform betrifft die Erfindung ein Verfahren nach einer der Ausführungsformen 1-11, dadurch gekennzeichnet, dass das Flammschutzmittel **F** Triethylphosphat enthält.

In einer dreizehnten Ausführungsform betrifft die Erfindung einen PUR/PIR-Hartschaumstoff, erhältlich nach dem Verfahren gemäß einer der Ausführungsformen 1-12.

In einer vierzehnten Ausführungsform betrifft die Erfindung einen PUR/PIR-Hartschaumstoff nach der dreizehnten Ausführungsform, dadurch gekennzeichnet, dass der Phosphorgehalt des PUR/PIR-Hartschaumstoffes < 1,5 Gew.-% ist.

In einer fünfzehnten Ausführungsform betrifft die Erfindung die Verwendung von PUR/PIR-Hartschaumstoffen nach der Ausführungsform 13 oder 14 zur Herstellung eines Isolationsmaterials.

In einer sechszehnten Ausführungsform betrifft die Erfindung ein Verfahren nach einer der Ausführungsformen 1-12, dadurch gekennzeichnet, dass in der Isocyanat-reaktiven Komponente **A** Polyesterpolyole und Polyetherpolyole mit einer Hydroxylzahl von 25 mg KOH/g bis 800 mg KOH/g enthalten sind.

In einer siebzehnten Ausführungsform betrifft die Erfindung ein Verfahren nach den Ausführungsformen 1-12, dadurch gekennzeichnet, dass das Flammschutzmittel **F** ein cyclisches Phosphazen gemäß der Formel (I) und k = 1 enthält, und der Substituent R kein Halogen und keine Hydroxylgruppe sind.

In einer achtzehnten Ausführungsform betrifft die Erfindung ein Verfahren nach einer der Ausführungsformen 1-12, dadurch gekennzeichnet, dass das Flammschutzmittel **F** ein Gemisch aus einem cyclischen Phosphazen gemäß der Formel (I) und einem Flammschutzmittel mit einem Siedepunkt ≤ 220°C in einem Verhältnis von 0,8 : 1,0 bis 1,0 : 5,0, bevorzugt 0,8 : 1,0 bis 1,0 : 4,0, besonders bevorzugt 1,0 : 1,0 bis 1,0 : 4,0, bezogen auf die Gewichtsanteile des Flammschutzmittels **F,** ist. Dies führt zu einer verbesserten Verarbeitbarkeit des Reaktionsgemisches.

In einer neunzehnten Ausführungsform betrifft die Erfindung einen PUR/PIR-Hartschaumstoff nach der dreizehnten oder vierzehnten Ausführungsform, dadurch gekennzeichnet, dass der PUR/PIR-Hartschaumstoff keinen Halogenanteil aufweist und einen Phosphoranteil von < 1,5 Gew.-%, bevorzugt 0,1 Gew.-% bis < 1,5 Gew.-%, besonders bevorzugt 0,1 Gew.-% bis 1,3 Gew.-%, besitzt. Ausgenommen von diesen Angaben sind durch den Prozess bedingte Spuren von Halogenen und Phosphor.

In einer zwanzigsten Ausführungsform betrifft die Erfindung ein Verfahren nach einer der Ausführungsformen 1-12, dadurch gekennzeichnet, dass das Verhältnis der Gewichtsanteile von Polyesterpolyolen und Polyetherpolyolen in der Isocyanat-reaktiven Komponente **A** bei 1,0 : ≤ 1,2, besonders bevorzugt 1,0 : ≤ 1,0.

In einer einundzwanzigsten Ausführungsform betrifft die Erfindung ein Verfahren nach einer der Ausführungsformen 1-12, dadurch gekennzeichnet, dass die Komponente **A** Polyesterpolyole enthält, besonders bevorzugt aromatische Polyesterpolyole. Durch die niedrige, inhärente Brennbarkeit von Polyurethanen basierend auf Polyesterpolyolen gegenüber Polyetherpolyolen kann der Anteil vom Flammschutzmittel **F** verringert werden. Dies ist von Vorteil, weil durch die weichmachende Wirkung von Flammschutzmitteln die Härte des erzeugten PUR/PIR-Hartschaumstoffes reduziert wird.

In einer zweiundzwanzigsten Ausführungsform betrifft die Erfindung ein Verfahren nach der ersten Ausführungsform, dadurch gekennzeichnet, dass das Reaktionsgemisch enthält

**A** ein Polyesterpolyol mit einem zahlenmittleren Molekulargewicht von 50 g/mol bis 2500 g/mol und einer Hydroxylzahl von 50 mg KOH/g bis 400 mg KOH/g,

**B** monomeres und polymeres MDI,

**C** Treibmittel, enthaltend eine Verbindung ausgewählt aus der Gruppe bestehend aus halogenfreien chemischen Treibmitteln, halogenfreien physikalischen Treibmitteln und (hydro)fluorierten Olefinen,

**D** Katalysator, enthaltend Alkalicarboxylat,

**E** Additiv, enthaltend einen Schaumstabilisator

**F** Flammschutzmittel, enthaltend eine Verbindung ausgewählt aus der Gruppe bestehend aus Propoxyphosphazen, Phenoxyphosphazen, Methoxyphenoxyphosphazen, Tolyloxyphenoxyphosphazen und Cyanophenoxyphosphazen.

In einer dreiundzwanzigsten Ausführungsform betrifft die Erfindung ein Verfahren nach der ersten Ausführungsform, dadurch gekennzeichnet, dass das Reaktionsgemisch enthält

**A** 50 Gew.-% bis < 90 Gew.-% eines oder mehrerer Polyesterpolyole und 5 Gew.-% bis 20 Gew.-% eines oder mehrerer Polyetherpolyole, jeweils bezogen auf das Gesamtgewicht der Komponente **A**,

**B** monomeres und polymeres MDI, wobei der Gewichtsanteil der NCO-Gruppen bezogen auf das Gesamtgewicht

der Komponente **B** 20 bis 40 Gew.-% beträgt,

**C** physikalische Treibmittel,

**D** Katalysator,

**E** gegebenenfalls Additiv,

**F** 20 Gew.-% bis 60 Gew.-% ein oder mehrerer cyclischen Phosphazene gemäß der Formel (I) und 40 Gew.-% bis 80 Gew.-% mindestens eines Flammschutzmittels mit einem Siedepunkt ≤ 220°C, jeweils bezogen auf das Gesamtgewicht der Komponente **F.**

In einer vierundzwanzigsten Ausführungsform betrifft die Erfindung ein Verfahren nach einer der Ausführungsformen 1-12, dadurch gekennzeichnet, dass die Isocyanatkomponente **B** ausgewählt ist aus mindestens einer Verbindung aus der Gruppe bestehend aus MDI, polymeres MDI und TDI.
Die bevorzugten Ausführungsformen können einzeln oder auch miteinander verknüpft ausgeführt werden.

**Beispiele**

Die vorliegende Erfindung wird anhand der nachfolgenden Beispiele weiter erläutert, ohne jedoch darauf beschränkt zu sein.

A-1 aliphatisch-aromatisches Polyesterpolyol mit einer OH-Zahl von 240 mg KOH/g und einer Funktionalität von 2

A-2 Umsetzungsprodukt aus Phthalsäureanhydrid und Diethylenglykol mit einer OH-Zahl von 442 mg KOH/g und einer Funktionalität von 2

A-3 Umsetzungsprodukt aus Trimethylolpropan und Ethylenoxid mit einer OH-Zahl von 255 mg KOH/g und einer Funktionalität von 3

B-1 Desmodur® 44V70L, Isocyanat mit 31,5 Gew.-% NCO-Gruppen und einer Viskosität von 1,1 Pa*s bei 20°C (Covestro)

B-2 Desmodur® 88IF41, Isocyanat mit 29 Gew.-% NCO-Gruppen und einer Viskosität von 1,1 Pa*s bei 20°C (Covestro)

C-1 n-Pentan, Treibmittel

D-1 Desmorapid® 1792, Katalysator mit 25 Gew.-% Kaliumacetat, (Covestro)

D-2 Gemisch aus 12 Gew.-% Milchsäure und 25 Gew.-% Kaliumacetat in Diethylenglycol, Katalysator

E-1 Tegostab® B8443, Schaumstabilisator (Evonik)

F-1 TEP, Halogenfreies Flammschutzmittel (Levagard TEP, Lanxess)

F-2 TCPP, Halogeniertes Flammschutzmittel (Levagard PP, Lanxess)

F-3 Exolit® RP 6520, Flammschutzmittel auf Basis von rotem Phosphor (Clariant)

F-4 Exolit® AP 422, Ammoniumpolyphosphat (Clariant)

F-5 Rabitle® FP 110, Cyclisches Phosphazen mit Phenoxysubstituenten (Fushimi Pharmaceuticals, halogenfrei)

F-6 Rabitle® FP 300-B, Cyclisches Phosphazen mit Cyanophenoxysubstituenten (Fushimi Pharmaceuticals, halogenfrei)

F-7 Rabitle® FP 366, Cyclisches Phosphazen mit Propoxylsubstituenten (Fushimi Pharmaceuticals, halogenfrei)

F-8 Rabitle® FP 390, Cyclisches Phosphazen mit Toluyloxy- und Phenoxysubstituenten (Fushimi Pharmaceuticals, halogenfrei)

**Herstellung und Prüfung der PUR/PIR-Hartschaumstoffe**

Die Messung des MARHE-Werts (**M**aximum **A**verage **R**ate of **H**eat **E**mission) wurde nach der ISO-Norm 5660-1 (März 2015) mit einem "Cone Calorimeter" gemessen. Die Probenkörper von 1 dm x 1 dm x 0,3 dm werden dabei 20 min lang durch einen Wärmestrahler mit einer Bestrahlungsstärke von 50 $kW/m^2$ bestrahlt. Der ermittelte MARHE-Wert gibt den Maximalwert der über die Versuchszeit gemittelten Wärmefreisetzungsrate an. Je nach Anwendung werden MARHE-Werte von $\leq$ 90 $MJ/m^2$ vorausgesetzt.

Die Messung der Rohdichte wurde nach der DIN EN ISO 845 (Oktober 2009) durchgeführt.

Auf Basis der Polyolkomponenten wurden im Labor PUR/PIR-Hartschaumstoffe durch die Vermischung von 0,3 $dm^3$ eines Reaktionsgemisches in einem Pappbecher hergestellt. Dazu wurden der jeweiligen Polyolkomponente das Flammschutzmittel, der Schaumstabilisator, Katalysatoren und n-Pentan als Treibmittel zugesetzt und kurz gerührt. Die erhaltene Mischung wurde mit dem Isocyanat vermischt und das Reaktionsgemisch in eine Papierform (3 x 3 x 1 $dm^3$) überführt und darin ausreagiert. Die genauen Rezepturen der einzelnen Versuche sowie die Ergebnisse der physikalischen Messungen an den erhaltenen Proben sind in Tabelle 1 wiedergegeben.

**Tabelle 1**

| | | 1 | 2 | 3 | 4 | 5 | 6 | 7 | 8 | 9 | 10 |
|---|---|---|---|---|---|---|---|---|---|---|---|
| | 1) | Vergleich | Erfindung | Vergleich | Vergleich | Vergleich | Vergleich | Vergleich | Erfindung | Erfindung | Erfindung |
| A-1 | Gew.-% | 53,5 | 50,7 | 57,7 | 57,7 | 57,7 | 57,7 | 57,7 | 57,7 | 57,7 | 57,7 |
| A-2 | Gew.-% | 1,8 | 1,7 | | | | | | | | |
| A-3 | Gew.-% | 4,2 | 4,0 | | | | | | | | |
| C-1 | Gew.-% | 12,3 | 13,2 | 13,0 | 13,0 | 13,0 | 13,0 | 13,0 | 13,0 | 13,0 | 13,0 |
| D-1 | Gew.-% | 4,2 | 4,0 | | | | | | | | |
| D-2 | Gew.-% | | | 5,0 | 5,0 | 5,0 | 5,0 | 5,0 | 5,0 | 5,0 | 5,0 |
| E-1 | Gew.-% | 3,3 | 3,2 | 2,6 | 2,6 | 2,6 | 2,6 | 2,6 | 2,6 | 2,6 | 2,6 |
| **Flammschutzmittel** | | | | | | | | | | | |
| F-1 | Gew.-% | 4,2 | | 10,9 | 10,9 | 17,4 | 21,7 | 10,9 | 17,4 | 10,9 | 17,4 |
| F-2 | Gew.-% | 16,7 | | 10,9 | | | | | | | |
| F-3 | Gew.-% | | | | 10,9 | 4,3 | | | | | |
| F-4 | Gew.-% | | | | | | | 10,9 | | | |
| F-5 | Gew.-% | | 23,3 | | | | | | | | |
| F-6 | Gew.-% | | | | | | | | 4,3 | | |
| F-7 | Gew.-% | | | | | | | | | 10,9 | |
| F-8 | Gew.-% | | | | | | | | | | 4,3 |
| **Isocyanat** | 2) | | | | | | | | | | |
| B-1 | g/100g | 167 | 159 | | | | | | | | |
| B-2 | g/100g | | | 174 | 174 | 174 | 174 | 174 | 174 | 174 | 174 |
| **Eigenschaften** | | | | | | | | | | | |
| Phosphor | g/kg 3) | 13 | 13 | 11 | 27 | 19 | 15 | 19 | 11 | 10 | 12 |
| Rohdichte | $kg/m^3$ | 40 | 43 | 34 | 38 | 37 | 37 | 39 | 33 | 34 | 34 |

(fortgesetzt)

| Eigenschaften | | | | | | | | | | | |
|---|---|---|---|---|---|---|---|---|---|---|---|
| MARHE | $MJ/m^2$ | 84 | 80 | 86 | 85 | 90 | 92 | 94 | 87 | 81 | 85 |

[1] Die Angabe der Gew.-% bezieht sich auf die Summe der Komponenten **A** bis **F** ohne **B** = 100 Gew.-%.
[2] Die Angabe g/100g bezieht sich auf die eingesetzte Masse (in g) der Komponente **B** pro Summe der Massen (in 100 g) der eingesetzten Komponenten **A** bis **F** ohne **B.**
[3] Anteil der Masse (in g) von Phosphor pro Summe der Massen (in kg) der eingesetzten Komponenten **A** bis **F.**

Die Tabelle 1 zeigt den alleinigen Einsatz von cyclischen Phosphazen gemäß der Formel (I) als Flammschutzmittel in Beispiel 2 gegenüber dem Beispiel 1, welches ein Flammschutzmittelgemisch, repräsentativ für den Stand der Technik, darstellt. Der Einsatz von cyclischen Phosphazenen gemäß Formel (I) in Beispiel 2 führt im Gegensatz zum Beispiel 1 mit einem Flammschutzmittelgemisch aus TCPP und TEP zu einem deutlich geringeren MARHE-Wert (**M**aximum **A**verage **R**ate of **H**eat **E**mission).

In der Technik wird häufig ein Flammschutzmittelgemisch aus zwei Komponenten verwendet. Bei den Beispielen 3-7 und den Beispielen 8-10 wird für das Flammschutzmittelgemisch ein Flammschutzmittel mit einem Siedepunkt ≤ 220 °C verwendet, in diesem Fall TEP. Im Falle der erfindungsgemäßen Beispiele führt solch ein Flammschutzmittelgemisch trotz niedrigerem Phosphorgehalt zu signifikant geringeren MARHE-Werten (Beispiele 8-10) im Vergleich zu den Beispielen 5-7. Besonders im Vergleich mit Flammschutzgemischen die roten Phosphor oder Ammoniumpolyphosphat enthalten, oder Reaktionsgemische die nur TEP als Flammschutzmittel beinhalten, besitzen die erfindungsgemäßen Beispiele einen erhöhten Flammschutz.

Ein weiterer überraschender Effekt ist, dass die Rohdichte der erfindungsgemäßen PUR/PIR-Hartschaumstoffe (Beispiele 8-10) im Vergleich mit dem halogenhaltigen Flammschutzmittelgemisch (Beispiel 3) gleichbleibend niedrig ist. Die Vergleichsbeispiele mit anderen halogenfreien Flammschutzmitteln (Beispiele 4-7) weisen eine deutlich höhere Rohdichte im Vergleich mit dem halogenhaltigen Vergleichsbeispiel 3 und den erfindungsgemäßen Beispiele 8-10 auf.

## Patentansprüche

1. Verfahren zur Herstellung von PUR/PIR-Hartschaumstoffen durch die Umsetzung eines Reaktionsgemisches enthaltend

   **A** eine Isocyanat-reaktive Komponente
   **B** eine Isocyanatkomponente
   **C** Treibmittel
   **D** Katalysator
   **E** gegebenenfalls Additiv
   **F** Flammschutzmittel,

   **dadurch gekennzeichnet, dass** das Flammschutzmittel **F** ein cyclisches Phosphazen gemäß der Formel (I) enthält

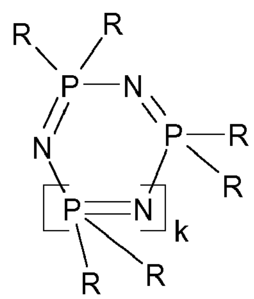

(I),

   wobei

   R jeweils gleich oder verschieden ist und für einen Aminrest, jeweils, gegebenenfalls halogeniertes, vorzugsweise mit Fluor halogeniertes, $C_1$- bis $C_8$-Alkyl, vorzugsweise Methyl, Ethyl, Propyl oder Butyl, jeweils, gegebenenfalls halogeniertes, vorzugsweise mit Fluor halogeniertes, weiter bevorzugt monohalogeniertes $C_1$- bis $C_8$-Alkoxy, vorzugsweise Methoxy, Ethoxy, Propoxy oder Butoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, jeweils gegebenenfalls durch Alkyl, vorzugsweise $C_1$-$C_4$-Alkyl, und/oder Halogen, vorzugsweise Chlor, Brom und/oder Hydroxy-substituiertes, $C_6$- bis $C_{20}$-Aryloxy, vorzugsweise Phenoxy, Naphthyloxy, jeweils gegebenenfalls durch Alkyl, vorzugsweise $C_1$-$C_4$-Alkyl, und/oder Halogen, vorzugsweise Chlor und/oder Brom, substituiertes $C_7$- bis $C_{12}$-Aralkyl, vorzugsweise Phenyl-$C_1$-$C_4$-alkyl, oder einen Halogen-Rest, vorzugsweise Chlor, oder einen OH-Rest steht; und
   k für 1 oder eine ganze Zahl von 1 bis 10, vorzugsweise für eine Zahl von 1 bis 8, besonders bevorzugt 1 bis 5, steht.

2. Verfahren nach Anspruch 1, **dadurch gekennzeichnet, dass** das Treibmittel **C** ausgewählt ist aus einem oder mehreren Treibmitteln der Gruppe bestehend aus halogenfreien chemischen Treibmitteln, halogenfreien physikalischen Treibmitteln und (hydro)fluorierten Olefinen.

3. Verfahren nach einem der Ansprüche 1 oder 2, **dadurch gekennzeichnet, dass** das Flammschutzmittel **F** kein in die Polyurethanstruktur einbaubares cyclisches Phosphazen gemäß der Formel (I) enthält.

4. Verfahren nach einem der Ansprüche 1-3, **dadurch gekennzeichnet, dass** der Substituent R des cyclischen Phosphazens gemäß der Formel (I) im Flammschutzmittel **F** kein Halogen ist.

5. Verfahren nach einem der Ansprüche 1-4, **dadurch gekennzeichnet, dass** das Flammschutzmittel **F** ein cyclisches Phosphazen gemäß der Formel (I) mit k = 1 enthält.

6. Verfahren nach einem der Ansprüche 1-5, **dadurch gekennzeichnet, dass** das Flammschutzmittel **F** ein cyclisches Phosphazen gemäß der Formel (I) enthält, welches ausgewählt ist aus der Gruppe bestehend aus Propoxyphosphazen, Phenoxyphosphazen, Methoxyphenoxyphosphazen, Tolyloxyphenoxyphosphazen und Cyanophenoxyphosphazen.

7. Verfahren nach einem der Ansprüche 1-6, **dadurch gekennzeichnet, dass** das Flammschutzmittel **F** 10 Gew.-% bis 100 Gew.-%, bevorzugt 15 Gew.-% bis 80 Gew.-%, besonders bevorzugt 40 Gew.-% bis 60 Gew.-%, bezogen auf die Gesamtmasse des Flammschutzmittels **F,** eines cyclischen Phosphazens gemäß der Formel (I) enthält.

8. Verfahren nach einem der Ansprüche 1-7, **dadurch gekennzeichnet, dass** der Gehalt an cyclischen Phosphazen gemäß der Formel (I) 1 Gew.-% bis 45 Gew.-%, bevorzugt 2 Gew.-% bis 25 Gew.-%, besonders bevorzugt 7 Gew.-% bis 15 Gew.-%, bezogen auf die Reaktionsmischung **A-F** ohne **B,** beträgt.

9. Verfahren nach einem der Ansprüche 1-8, **dadurch gekennzeichnet, dass** das Flammschutzmittel **F** neben einem cyclischen Phosphazen gemäß der Formel (I) ein Flammschutzmittel mit einem Siedepunkt ≤ 220 °C enthält.

10. Verfahren nach einem der Ansprüche 1-9, **dadurch gekennzeichnet, dass** das Flammschutzmittel **F** aus zwei Komponenten besteht.

11. Verfahren nach einem der Ansprüche 1-10, **dadurch gekennzeichnet, dass** das Flammschutzmittel **F** kein halogenhaltiges Flammschutzmittel enthält.

12. Verfahren nach einem der Ansprüche1-11, **dadurch gekennzeichnet, dass** das Flammschutzmittel **F** Triethylphosphat enthält.

13. PUR/PIR-Hartschaumstoff, erhältlich nach dem Verfahren gemäß einem der Ansprüche 1 bis 12.

14. PUR/PIR-Hartschaumstoff nach Anspruch 13, **dadurch gekennzeichnet, dass** der Phosphorgehalt des PUR/PIR-Hartschaumstoffes < 1,5 Gew.-% ist.

15. Verwendung von PUR/PIR-Hartschaumstoffen nach Anspruch 13 oder 14 zur Herstellung eines Isolationsmaterials.

Europäisches Patentamt
European Patent Office
Office européen des brevets

# EUROPÄISCHER RECHERCHENBERICHT

Nummer der Anmeldung
EP 17 18 0816

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CN 105 713 506 A (ANHUI DEQUAN NEW BUILDING MAT TECH CO LTD) 29. Juni 2016 (2016-06-29) * Zusammenfassung * ----- | 1-15 | INV. C08G18/48 C08G18/76 C08J9/14 C08G18/09 C08G18/40 C08G18/42 C08K5/5399 C08L75/04 C08J9/00 |
| X | CN 105 860 814 A (ANHUI DEQUAN NEW BUILDING MAT TECH CO LTD) 17. August 2016 (2016-08-17) * Zusammenfassung * ----- | 1-15 | |
| X | CN 105 820 547 A (ANHUI DEQUAN NEW BUILDING MAT TECH CO LTD) 3. August 2016 (2016-08-03) * Zusammenfassung * ----- | 1-15 | |
| X | CN 105 838 231 A (ANHUI DEQUAN NEW BUILDING MAT TECH CO LTD) 10. August 2016 (2016-08-10) * Zusammenfassung * ----- | 1-15 | |
| X | CN 105 713 505 A (ANHUI DEQUAN NEW BUILDING MAT TECH CO LTD) 29. Juni 2016 (2016-06-29) * Zusammenfassung * ----- -/-- | 1-15 | RECHERCHIERTE SACHGEBIETE (IPC) C08G C08J C08K C08L C07F |

1

Der vorliegende Recherchenbericht wurde für alle Patentansprüche erstellt

| Recherchenort | Abschlußdatum der Recherche | Prüfer |
|---|---|---|
| München | 28. November 2017 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 17 18 0816

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (IPC) |
| X | QIAN LIJUN ET AL: "Bi-phase flame-retardant effect of hexa-phenoxy-cyclotriphosphazene on rigid polyurethane foams containing expandable graphite", POLYMER, ELSEVIER SCIENCE PUBLISHERS B.V, GB, Bd. 55, Nr. 1, 15. Dezember 2013 (2013-12-15), Seiten 95-101, XP028549265, ISSN: 0032-3861, DOI: 10.1016/J.POLYMER.2013.12.015 * Title; Tabelle 1 * ----- | 1-15 | |
| X,D | MODESTI M ET AL: "Thermally stable hybrid foams based on cyclophosphazenes and polyurethanes", POLYMER DEGRADATION AND STABILITY, BARKING, GB, Bd. 87, Nr. 2, 1. Februar 2005 (2005-02-01), Seiten 287-292, XP027766390, ISSN: 0141-3910 [gefunden am 2005-02-01] * Zusammenfassung; Tabelle 1; Verbindung PN6 * ----- | 1-15 | RECHERCHIERTE SACHGEBIETE (IPC) |
| X | GB 1 031 020 A (SHELL INT RESEARCH) 25. Mai 1966 (1966-05-25) * Spalte 1, Zeilen 10-14; Anspruch 20 * ----- | 1-15 | |
| X | JP S57 133111 A (BRIDGESTONE TIRE CO LTD) 17. August 1982 (1982-08-17) * Zusammenfassung; Abbildung 1; Tabelle 1 * ----- -/-- | 1-15 | |

Der vorliegende Recherchenbericht wurde für alle Patentansprüche erstellt

1

| Recherchenort | Abschlußdatum der Recherche | Prüfer |
|---|---|---|
| München | 28. November 2017 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 17 18 0816

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JP H01 190718 A (NITTO KASEI CO LTD) 31. Juli 1989 (1989-07-31) * Absatz [0010]; Anspruch 1 * ----- | 1-15 | |
| X,D | CN 102 816 186 A (YANG YANWEI; JIANGSU CHANGSHUN INST OF POLYMER MATERIAL CO LTD) 12. Dezember 2012 (2012-12-12) * Verbindungen I-V * ----- | 1-15 | |
| X,D | CN 103 992 353 A (UNIV CHANGZHOU) 20. August 2014 (2014-08-20) * Zusammenfassung; Anspruch 1 * ----- | 1-15 | |
| X | YANG RONG ET AL: "Synthesis, mechanical properties and fire behaviors of rigid polyurethane foam with a reactive flame retardant containing phosphazene and phosphate", POLYMER DEGRADATION AND STABILITY, Bd. 122, 26. Oktober 2015 (2015-10-26), Seiten 102-109, XP029313139, ISSN: 0141-3910, DOI: 10.1016/J.POLYMDEGRADSTAB.2015.10.007 * Title; Scheme 1 * ----- | 1-15 | RECHERCHIERTE SACHGEBIETE (IPC) |
| X | DE 11 76 841 B (ALBRIGHT & WILSON MFG LTD) 27. August 1964 (1964-08-27) * Spalte 4, Zeilen 16-18; Anspruch 1 * ----- | 1-15 | |
| X | GB 1 018 777 A (SHELL INT RESEARCH) 2. Februar 1966 (1966-02-02) * Seite 1, Zeilen 10-14; Ansprüche 29-35 * ----- | 1-15 | |
| X | GB 1 001 983 A (SHELL INT RESEARCH) 18. August 1965 (1965-08-18) * Seite 3, Zeilen 6-17; Ansprüche 6-12 * ----- -/-- | 1-15 | |

Der vorliegende Recherchenbericht wurde für alle Patentansprüche erstellt

1

| Recherchenort | Abschlußdatum der Recherche | Prüfer |
|---|---|---|
| München | 28. November 2017 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

**EUROPÄISCHER RECHERCHENBERICHT**

Nummer der Anmeldung
EP 17 18 0816

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | GB 1 020 254 A (SHELL INT RESEARCH) 16. Februar 1966 (1966-02-16) * Seite 2, Zeilen 100-103; Ansprüche 1-9 * ----- | 1-15 | |
| X | US 3 450 799 A (KOBER EHRENFRIED H ET AL) 17. Juni 1969 (1969-06-17) * Spalte 1, Zeilen 18-21; Anspruch 1 * ----- | 1-15 | |

RECHERCHIERTE SACHGEBIETE (IPC)

Der vorliegende Recherchenbericht wurde für alle Patentansprüche erstellt

1

| Recherchenort | Abschlußdatum der Recherche | Prüfer |
|---|---|---|
| München | 28. November 2017 | Lanz, Sandra |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.......................................................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 17 18 0816

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2017

| Im Recherchenbericht angeführtes Patentdokument | Datum der Veröffentlichung | Mitglied(er) der Patentfamilie | Datum der Veröffentlichung |
|---|---|---|---|
| CN 105713506 A | 29-06-2016 | KEINE | |
| CN 105860814 A | 17-08-2016 | KEINE | |
| CN 105820547 A | 03-08-2016 | KEINE | |
| CN 105838231 A | 10-08-2016 | KEINE | |
| CN 105713505 A | 29-06-2016 | KEINE | |
| GB 1031020 A | 25-05-1966 | BE 656765 A | 08-06-1965 |
| | | GB 1031020 A | 25-05-1966 |
| | | NL 6414233 A | 10-06-1965 |
| JP S57133111 A | 17-08-1982 | JP S6314724 B2 | 01-04-1988 |
| | | JP S57133111 A | 17-08-1982 |
| JP H01190718 A | 31-07-1989 | KEINE | |
| CN 102816186 A | 12-12-2012 | KEINE | |
| CN 103992353 A | 20-08-2014 | KEINE | |
| DE 1176841 B | 27-08-1964 | DE 1176841 B | 27-08-1964 |
| | | GB 1013461 A | 15-12-1965 |
| | | US 3206494 A | 14-09-1965 |
| | | US 3240728 A | 15-03-1966 |
| GB 1018777 A | 02-02-1966 | BE 650622 A | 18-01-1965 |
| | | GB 1018777 A | 02-02-1966 |
| | | NL 6408119 A | 19-01-1965 |
| GB 1001983 A | 18-08-1965 | BE 645459 A | 21-09-1964 |
| | | GB 1001983 A | 18-08-1965 |
| | | NL 6402984 A | 22-09-1964 |
| GB 1020254 A | 16-02-1966 | GB 1020254 A | 16-02-1966 |
| | | US 3450675 A | 17-06-1969 |
| US 3450799 A | 17-06-1969 | US 3450799 A | 17-06-1969 |
| | | US 3627841 A | 14-12-1971 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 20120289634 A1
- WO 2012098185 A
- WO 2014086800 A
- CN 103992353 A
- CN 102816186 A
- CN 102766167 A
- CN 102766168 A
- EP 2910585 A1
- EP 1359177 A1
- WO 2010043624 A
- EP 1923417 A
- US 2764565 A


### In der Beschreibung aufgeführte Nicht-Patentliteratur


- Polyurethane. **G.W. BECKER ; D. BRAUN.** Kunststoff Handbuch. Carl Hanser Verlag, 1983, vol. 2, 104-1, 5
- Recent Advances on the Utilization of Nanoclays and Organophosphorus Compounds in Polyurethane Foams for Increasing Flame Retardancy. **J.C. QUAGLIANO ; V.M. WITTEMBERG ; I.C.G. GARCIA.** Structural Nanocomposites, Engineering Materials. Springer Verlag, 2013, vol. 1, 249-258
- **S.V. LEVCHIK ; E.D. WEIL.** A Review of Recent Progress in Phosphorus-based Flame Retardants. *J. Fire Sci.,* 2006, vol. 24, 345-364
- **L. CHEN ; Y.-Z. WANG.** A review on flame retardant technology in China. Part 1: development of flame retardants. *Polym. Adv. Technol.,* 2010, vol. 21, 1-26
- **S.-Y. LU ; I. HAMMERTON.** Recent developments in the chemistry of halogen-free flame retardant polymers. *Prog. Polym. Sci.,* 2002, vol. 27, 1661-1721
- **C. S. REED ; J. P. TAYLOR ; K. S. GUIGLEY ; M. M. COLEMAN ; H. R. ALLCOCK.** Polyurethane/Poly[bis(carboxylatophenoxy)phosphazene] Blends and Their Potential as Flame-Retardant Materials. *Polym. Eng. Sci.,* 2000, vol. 40, 465-472
- **M. MODESTI ; L. ZANELLA ; A. LORENZETTI ; R. BERTANI ; M. GLERIA.** Thermally stable hybrid foams based on cyclophosphazenes and polyurethanes. *Polym. Degrad. Stab.,* 2005, vol. 87, 287-292
- **N.N. REED ; K. D. JANDA.** Stealth Star Polymers: A New High-Loading Scaffold for Liquid-Phase Organic Synthesis. *Org. Lett.,* 2000, vol. 2, 1311-1313
- Chemistry and Technology of Polyols for Polyurethanes. **IONESCU.** Oligo-Polyols for Elastic Polyurethanes. Rapra Technology Limited, 2005, 55 ff
- Polyester Polyols for Elastic Polyurethanes. 263 ff
- Polyether Polyols for Rigid Polyurethane Foams. 321 ff
- Polyester Polyols for Rigid Polyurethane Foams. 419 ff
- Kunststoff-Handbuch. Carl Hanser Verlag, 1993, vol. VII, 267 ff
- Polyurethan Taschenbuch. Carl Hanser Verlag, 2001, 83-102